# EUROPÄISCHE PATENTSCHRIFT

(11) **EP 1 390 190 B1**
(45) Veröffentlichungstag und Bekanntmachung des Hinweises auf die Patenterteilung: **02.03.2005**
(21) Anmeldenummer: 02745232.5
(22) Anmeldetag: 15.04.2002
(51) Int. Cl.: B29C 47/92, B29C 47/76, B29C 47/50

(54) **VERFAHREN UND VORRICHTUNG ZUR DRUCKREGELUNG BEI EINEM EINSCHNECKENENTGASUNGSEXTRUDER ODER EINEM KASKADENEXTRUDER**
METHOD AND DEVICE FOR REGULATING PRESSURE IN A SINGLE-SCREW DEGASSING EXTRUDER OR IN A CASCADE EXTRUDER
PROCEDE ET DISPOSITIF DE REGULATION DE PRESSION DANS UNE EXTRUDEUSE DE DEGAZAGE A UNE SEULE VIS OU UNE EXTRUDEUSE EN CASCADE

(30) Priorität: 30.05.2001 DE 10126502; 22.06.2001 DE 10129707
(43) Veröffentlichungstag der Anmeldung: 25.02.2004
(73) Patentinhaber: Röhm GmbH & Co. KG, 64293 Darmstadt (DE)
(72) Erfinder: SCHÄFER, Bernhard, 64521 Gross-Gerau (DE); MEIER-KAISER, Michael, 64665 Alsbach (DE)
(86) Internationale Anmeldenummer: PCT/EP2002/004148
(87) Internationale Veröffentlichungsnummer: WO 2002/096619

(56) Entgegenhaltungen:
- CH-A- 542 047
- DE-C- 3 744 193
- US-A- 3 704 972
- US-A- 4 959 186
- PATENT ABSTRACTS OF JAPAN vol. 014, no. 113 (M-0944), 2. März 1990 (1990-03-02) & JP 01 314134 A (JAPAN STEEL WORKS LTD:THE), 19. Dezember 1989 (1989-12-19)
- PATENT ABSTRACTS OF JAPAN vol. 010, no. 070 (M-462), 19. März 1986 (1986-03-19) & JP 60 214919 A (ASAHI KASEI KOGYO KK), 28. Oktober 1985 (1985-10-28)
- R. STEHR & P. ANDERSEN : "Controlling a Gear Pump Assisted Degassing Extruder via dual Pressure Sensing" ANTEC, Bd. 1, 3. - 7. Mai 1992, Seiten 416-420, XP002217050 Detroit, USA in der Anmeldung erwähnt

## Beschreibung

Die Erfindung betrifft ein Verfahren und Vorrichtung zur Druckregelung bei einem Einschneckenentgasungsextruder oder einem Kaskadenextruder.

### Stand der Technik

Die Extrusion von thermoplastischen Kunststoffen zu Formkörpem wie Platten oder Folien erfolgt in der Regel dann unter Einsatz eines Einschneckenentgasungsextruders, wenn während des Extrusionsprozesses flüchtige Bestandteile, die sich negativ auf die Eigenschaften des herzustellenden Extrudats auswirken, abgetrennt werden sollen. Diese flüchtigen Bestandteile können z.B. Wasser, Monomere oder Oligomere sein. Im Einschneckenentgasungsextruder wird der in Granulatform vorliegende Kunststoff in einer ersten Schneckenstufe, bestehend aus einem Einzugsbereich, einer Kompressionszone und einer ersten Homogenisierungszone (im folgenden als Eintragszone bezeichnet) zunächst geschmolzen, komprimiert und homogenisiert und einer zweiten Schneckenstufe zugeführt. Diese besteht aus einer tief geschnittenen Entgasungszone und einer Austragszone, in denen die Schmelze entgast, komprimiert und in eine Extrusionsdüse gefördert wird, aus der die Schmelze dann in der gewünschten Form austritt.

Eine alternative Ausführung ist der sogenannte Kaskadenextruder. Bei dieser Anordnung ist die Schnecke entsprechend den genannten zwei Scheckenstufen in zwei hintereinandergeschaltete Einschnecken mit separaten Antrieben unterteilt. Die Drehzahlen der beiden Schnecken werden üblicherweise in einem festen Verhältnis gehalten.
Üblicherweise sind Extruder der beschriebenen Art mit einem Temperiersystem ausgestattet, das es erlaubt, über den Zylinder Wärme zu- oder abzuführen, um die Temperatur im Bereich der Schnecke in der gewünschten Art und Weise einzustellen. Die Temperierung kann über eine Wärmeträgerflüssigkeit erfolgen, die wiederum mittels bekannter Heiz-/Kühlgeräte temperiert wird. Häufig werden auch Kombinationen aus elektrischer Beheizung und Luft- oder Wasserkühlung eingesetzt. Die Regelung der Temperatur über ein Thermoelement im Zylinder, das einen Regler ansteuert, der wiederum die Wärmezu- oder -abfuhr auslöst, ist Stand der Technik.
Um eine möglichst an die Anforderungen des Prozesses angepasste Temperaturführung zu ermöglichen, ist die Temperierung über der Länge des Extruders meist in eine größere Anzahl von unabhängig regelbaren Zonen unterteilt.

DE-C 27 58 265 beschreibt eine Regeleinrichtung zur Überwachung des Füllstandes einer Entgasungsöffnung an einem Extruder für die Verarbeitung von Hochdruck-Polyethylenschmelze.

DE-C 37 44 193 beschreibt ein Verfahren zum Entgasen einer thermoplastischen Kunststoffschmelze über einen weiten Viskositätsbereich mit mehreren hintereinandergeschalteten Entgasungsstufen.

Stehr, R. und Andersen, P. beschreiben in ANTEC '92, S. 416 - 420:
"Controlling a Gear Pump Assisted Degassing Extruder via Dual Pressure Sensing" eine Vorrichtung, bestehend aus einem Einschneckenentgasungsextruder mit anschließender Zahnradschmelzepumpe. Der Einschneckenentgasungsextruder mit erster und zweiter Schneckenstufe weist einen Meßregelkreis zur Aufrechterhaltung eines vorgegebenen Drucks am Ende der Austragszone auf, wodurch sichergestellt sein soll, daß die entsprechende Extruderzone mit Schmelze gefüllt ist, aber keine Schmelze aus der Entgasungsöffnung austritt. In den Druckdiagrammen werden für die erste Hälfte der Austragszone hohe Drücke, um die 30 bar, angegeben (pₘ). Die Drücke hinter der Schneckenspitze (pₛ) werden niedriger angegeben und weisen offenbar starke periodische Schwankungen im Bereich zwischen 15 und 30 bar auf. Eine Druckregelung in der ersten Hälfte der Austragszone, mit dem Ziel dort eine Teilfüllung mit Schmelze zu vermeiden, wird nicht angeregt.

### Allgemeine Problemstellung

Ein kritischer Punkt bei der Gestaltung der Schneckengeometrie eines Einschneckenentgasungsextruders bzw. der Festlegung des Verhältnisses der Schneckendrehzahlen beim Kaskadenextruder ist die Abstimmung des Förderverhaltens der beiden Schneckenstufen. Dabei muss sichergestellt sein, dass in jedem Betriebszustand des Extruders (Kunststoff, Durchsatz und Temperatur) die zweite Stufe mehr Schmelze abtransportieren kann, als die erste Stufe liefert.

Andernfalls tritt Schmelze aus dem Entgasungsbereich aus, was in der Regel zu einem Zusammenbruch des Prozesses führt (Anhalten der Anlage zum Reinigen des Entgasungsbereiches, Wiederanfahren). Um sicherzustellen, dass der Extruder in einem breiten Betriebsbereich eingesetzt werden kann, wird üblicherweise das Förderverhalten der beiden Stufen so eingestellt, dass die zweite Stufe deutlich besser fördert als die erste, so dass auch in kritischen Betriebszuständen ein Austreten von Schmelze aus der Entgasungszone sicher vermieden werden kann. Dies bedingt, dass häufig nicht nur die tief geschnittene Entgasungszone, sondern auch ein mehr oder weniger langer Bereich der Austragszone nur teilgefüllt sind, das heißt, dass sich Schmelze nur direkt vor der schiebenden Flanke des Schneckenstegs befindet. Folge davon ist, dass sich in den nicht dauerhaft mit Schmelze gefüllten Bereichen Kunststoff ablagern kann. Insbesondere wenn während der Extrusion Unregelmäßigkeiten bei der Schmelzeförderung auftreten, kann es geschehen, dass Teilmengen der Schmelze zu lange im Extruder verbleiben und dort den hohen Temperaturen im Kontakt mit der inneren Oberfläche der Schnecke ausgesetzt sind. Dabei kann es vorkommen, dass Teile der Schmelze in eine gelartige Masse, oder bei noch ungünstigeren Bedingungen in kohleartige Ablagerungen umgewandelt werden. Diese Beläge lösen sich teilweise während der Extrusion wieder und gelangen so als unerwünschte Verunreinigungen in die Schmelze.

Die beschriebenen Probleme treten sowohl während des laufenden Extrusionsprozesses, bedingt durch Schwankungen im Förderverhalten der ersten Schneckenstufe auf, als auch im besonderen bei starken Änderungen des Betriebspunktes, wie sie durch eine Änderung des Durchsatzes oder des verarbeiteten Kunststoffes hervorgerufen werden.

Die beschriebene Problematik-führt außerdem dazu, dass bei einem Wechsel des verarbeiteten Kunststoffs, bei Unverträglichkeit der beiden Kunststoffe, eine aufwendige Demontage und Reinigung der Schnecke unerlässlich ist. Andernfalls treten auch noch längere Zeit nach dem Wechsel des Kunststoffs Verunreinigungen durch den zuvor verarbeiteten Kunststoff auf.

Lediglich die beschriebenen, kohleartigen Ablagerungen können durch übliche Schmelzefiltersysteme zumindest teilweise abgetrennt werden. Eine Entfernung von gelartigen Verunreinigungen oder von anderen Kunststoffen mit vergleichbaren Verarbeitungstemperaturen ist nicht möglich.

Besonders transparente Produkte mit hohen Anforderungen an die optischen Eigenschaften können durch diese Verunreinigungen unbrauchbar gemacht werden.

Zwischen dem Einschneckenentgasungsextruder bzw. dem Kaskadenextruder und der Extrusionsdüse befinden sich in der Regel eine Schmetzepumpe zur Konstanthaltung der Fördermenge, sowie Filtereinheiten zur Abtrennung von Verunreinigungen aus der Schmelze.

Zur Abstimmung der Fördermengen von Extruder und Schmetzepumpe wird üblicherweise der Druck zwischen Extruderspitze und Schmelzepumpe als Regelgröße gemessen und mit der Extruderschneckendrehzahl als Stellwert auf einen vorgegebenen Sollwert hin geregelt (siehe z.B. Dissertation Konrad Kerres, Augustinus Verlag, Aachen, 1995). Über diese Regelung werden Änderungen im Förderverhalten des Extruders, z.B. bedingt durch die Temperatur im Einzugsbereich oder Änderungen im Verhalten des Kunststoffs (Schüttdichte, Einzugsverhalten) ausgeglichen.

Ein Maß für die Gleichmäßigkeit der Schmelzeförderung in der Schmelzepumpe ist der Druck nach der Pumpe. Ziel der Kombination von Extruder und Schmelzepumpe ist die Druckschwankungen nach der Pumpe auf Werte kleiner +/- 5% zu begrenzen. Dieses Ziel kann dann erreicht werden, wenn der Druck vor der Zahnradpumpe sich um nicht mehr als +/- 20% ändert. Stärkere Schwankungen des Drucks vor der Pumpe wirken sich auf die Gleichmäßigkeit der Förderung und damit den Druck nach der Pumpe aus.

Üblicherweise werden die Schwankungen des Drucks vor der Pumpe durch die beschriebene Regelung der Drehzahl der Extruderschnecke ausgeglichen. Bei Einschneckenentgasungsextrudern bzw. Kaskadenextrudem mit einer im wesentlichen nur teilgefüllten zweiten Austragszone können allerdings relativ hochfrequente Druckschwankungen auftreten, die sich nicht ausregeln lassen. Der Druck schwankt mit der Frequenz der Schneckendrehzahl. Dies stört zum einen die beschriebene Regelung des Drucks vor der Pumpe und verursacht zum anderen Schwankungen in der Fördermenge, die sich auf die Geometrie des hergestellten Extrudats auswirken können.

Der Sollwert für den Druck vor der Schmelzepumpe wird üblicherweise vom Maschinenbediener so eingegeben, dass zum einen die Pumpe einen Druckaufbau leistet (dies ist durch das Konstruktionsprinzip der meisten Pumpen, die die geförderte Schmelze als Schmiermittel nutzen, bedingt), zum anderen darf ein maximaler Druck, der sich aus den zulässigen Zuhaltekräften am Flansch zwischen Extruder und Schmetzepumpe ergibt, nicht überschritten werden.

### Aufgabe und Lösung

Bei der Extrusion von Halbzeugen, wie Platten oder Folien aus thermoplastischem Kunststoff und insbesondere bei transparenten oder transluzenten thermoplastischen Kunststoffen kommt der Vermeidung von Verunreinigungen in der Schmelze eine wichtige Bedeutung zu, da häufig hohe Anforderung an eine einwandfreie optische Qualität der extrudierten Halbzeuge gestellt wird. Verunreinigungen können z. B. in Form von Schmutzpartikeln mit dem Granulat eingetragen werden oder aber auch im Zuge der Schmelzeverarbeitung entstehen.

Es ist bekannt, solche Verunreinigungen durch nachgeschaltete Schmelzefilter abzutrennen. Allerdings ist es sehr schwierig, gelartige Verunreinigungen oder Verunreinigungen durch andere Kunststoffe abzutrennen. Gelangen zu viele Verunreinigungen ins Endprodukt, so ist dessen Qualität häufig beeinträchtigt oder gar ungenügend. Insbesondere bei transparenten Folien führen schon geringe Beeinträchtigungen zu leicht erkennbaren Fehlstellen, die bei hohen Qualitätsanforderungen nicht akzeptabel sind. Grundsätzlich gilt, dass es besser ist, die Verunreinigungen möglichst weitgehend zu vermeiden, als diese dann später wieder zu entfernen.

Der Erfindung liegt die Beobachtung zugrunde, daß bei Einschneckenentgasungsextrudem oder Kaskadenextrudem von der Schmelze her stammende Ablagerungen häufig auf den vorderen Schneckengängen im Bereich der ersten Hälfte der Austragszone festgestellt werden.

Es wird angenommen, daß es während des Betriebes des Extruders immer wieder zu Betriebszuständen kommen kann, in denen nicht dauerhaft mit Schmelze gefüllte Bereiche der Schnecke mit Schmelze in Kontakt kommen. Die Schmelze wird in diesen Bereichen nur schlecht oder nicht mehr gefördert. Sie kann sich festsetzen und ist dann länger als im normalen Betriebszustand den hohen Temperaturen ausgesetzt. Die abgelagerte Schmelze kann in den bereits oben beschriebenen Gelzustand übergehen oder bei noch längerer Verweildauer in kohleartige Beläge umgewandelt werden.

Tritt dann wieder ein Betriebszustand auf, in dem größere Bereiche der Schnecke mit Schmelze benetzt werden, dann werden die gelartigen oder kohleartigen Beläge zumindest teilweise mitgenommen und gelangen als Verunreinigungen in das Produkt.

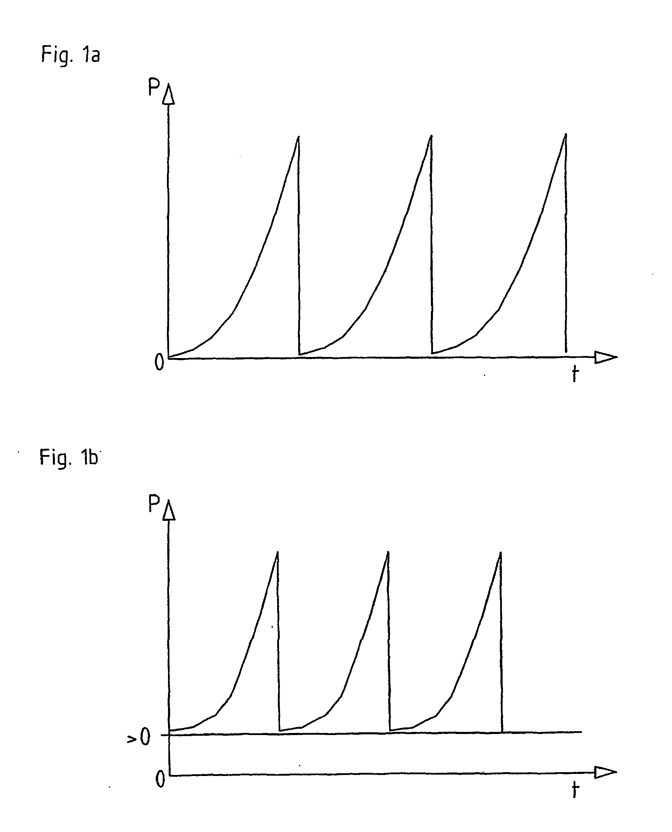

Die Teilfüllung der Schnecke im Bereich der Austragszone kann durch eine Untersuchung des Druckverlaufs über der Zeit erkannt werden. Ein typischer Druckverlauf im Bereich der Austragszone über der Zeit bei teilgefüllter Schnecke ist in Fig. 1a dargestellt. Man erkennt eine Sägezahnfunktion mit Phasen eines konstanten, minimalen Druckes. Der minimale Druck entspricht dem Druck in der Entgasungszone, liegt also üblicherweise unter dem Atmosphärendruck von 1 bar. Der regelmäßige Anstieg des Drucks wird durch die Schmelze vor der schiebenden Schneckenflanke und den Schneckensteg verursacht, die unter dem Druckaufnehmer vorbeilaufen. Nach dem Schneckensteg sinkt der Druck wieder auf den Minimalwert. Dementsprechend ändert sich der Druck mit dem Produkt aus Schneckendrehzahl und Anzahl der Schneckengänge.

Es wird als Aufgabe der vorliegenden Erfindung gesehen, die beschriebenen Ablagerungen zu verringern bzw. möglichst ganz zu vermeiden.

### Die Aufgabe wird gelöst durch ein

Verfahren zur Regelung des Minimalwertes des Drucks in der ersten Hälfte der Austragszone in Förderrichtung bei einem Einschneckenentgasungsextruder oder einem Kaskadenextruder während der Förderung einer Schmelze eines thermoplastischen Kunststoffs, wobei der Einschneckenentgasungsextruder oder der Kaskadenextruder jeweils eine erste Schneckenstufe (15), eine Entgasungszone (14), eine Austragszone (22) sowie einen Meßregelkreis (M) aufweisen, der einen Druckmeßsensor (M) in der ersten Hälfte der Austragszone, einen Regler (R) und ein Stellglied (S) zur Beeinflussung des Drucks in der Austragszone beinhaltet,
dadurch gekennzeichnet,
daß der Druck mittels des Druckmeßsensors (M) gemessen wird und über den Regler (R) und das Stellglied (S) so eingestellt wird, daß der Minimalwert am Ort der Messung zwischen 0,1 und 10 bar liegt.

Weitere Ausgestaltungen des Erfindung wird in den Ansprüchen 2 bis 11 dargestellt.

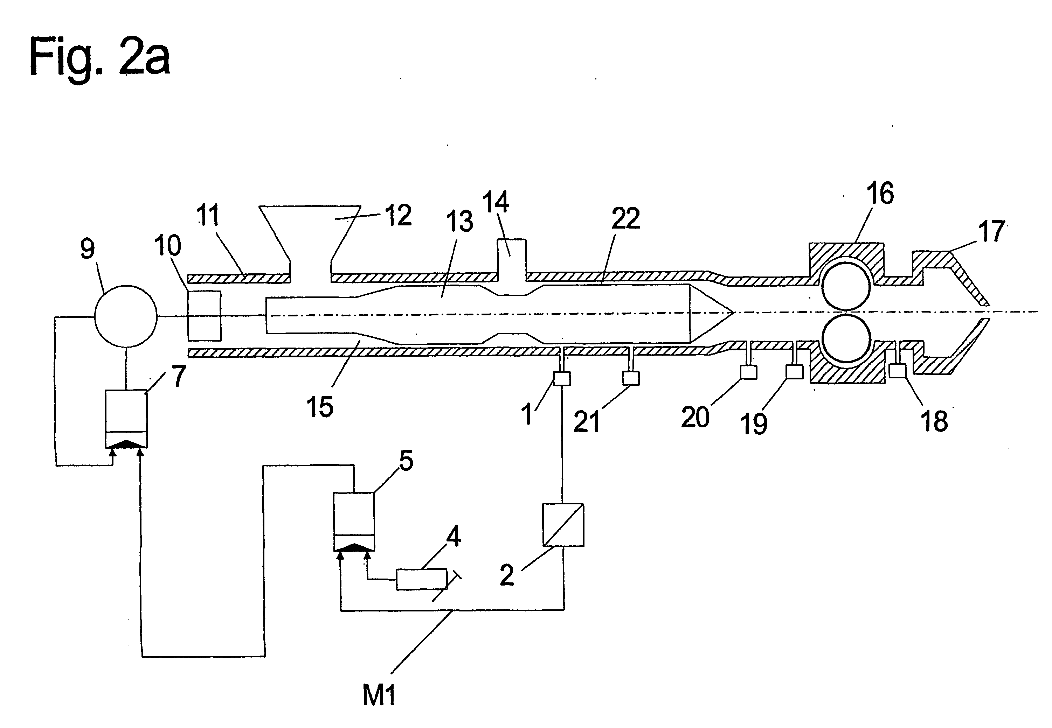

Die Erfindung wird durch folgende Figuren erläutert:
Fig. 1 a:
   Schematische Darstellung des Druckverlaufs über die Zeit (t) im Bereich der vorderen Hälfte der Austragzone ohne Regelung
Fig. 1 b:
   Schematische Darstellung des Druckverlaufs über die Zeit (t) im Bereich der vorderen Hälfte der Austragzone mit erfindungsgemäßer Regelung
Fig. 2 a:
   Schematische Darstellung einer möglichen Ausführung der Erfindung bei einem Einschneckenentgasungsextruder
   Bezugszeichenliste:
   - 1.: Druckmeßsensor (P) in der ersten Hälfte der Austragszone
   - 2.: Messverstärker zum Ausfiltern der Minimaldrücke
   - 4.: Regler (P_{1:} Soll-Wert)
   - 5.: Regler (PI-Regler)
   - 7.: Regler (Ist-Wert der Schneckendrehzahl)
   - 9.: Extruder-Motor (Antrieb)
   - 10.: Extruder-Getriebe
   - 11.: Schneckenzylinder
   - 12.: Materialtrichter
   - 13.: Erster Schneckenabschnitt (Eintragszone)
   - 14.: Entgasungszone
   - 15.: Einzugszone
   - 16.: Schmelzepumpe
   - 17.: Extrusionsdüse
   - 18.: P₅: Druckmeßsensor nach der Schmelzpumpe
   - 19.: P₄: Druckmeßsensor vor der Schmelzepumpe
   - 20.: P₃: Druckmeßsensor vor der Drossel / nach der Schnecke
   - 21.: P₂: Druckmeßsensor in der Meterinzone
   - 22.: Zweiter Schneckenabschnitt (Austragszone)
Fig. 2b:
   Schematische Darstellung einer möglichen Ausführung der Erfindung bei einem Einschneckenentgasungsextruder mit einem zusätzlichen Meßregelkreis (M2). Bezugszeichen wie in Fig. 2a. Der zweite Meßregelkreis (M2) besteht aus dem Druckmeßsensor (19), Meßverstärker (23) und den Reglern (7, 24).

### Ausführung der Erfindung

Die Erfindung betrifft Verfahren zur Regelung des Minimalwertes des Drucks in der ersten Hälfte der Austragszone in Förderrichtung bei einem Einschneckenentgasungsextruder oder einem Kaskadenextruder während der Förderung einer Schmelze eines thermoplastischen Kunststoffs. Der Einschneckenentgasungsextruder oder der Kaskadenextruder weisen jeweils eine erste Schneckenstufe (15), eine Entgasungszone (14), eine zweite Schneckenstufe entsprechend der Austragszone (22), sowie einen Meßregelkreises (M) auf, der einen Druckmeßsensor (P) in der ersten Hälfte, bevorzugt im ersten Drittel, besonders bevorzugt im ersten Viertel der Austragszone (22), einen Regler (R) und ein Stellglied (S) zur Beeinflussung des Drucks in der Austragszone beinhaltet. Der Druck wird mittels des Druckmeßsensors (1) gemessen und über den Regler (R) und das Stellglied (S) so eingestellt, daß der Minimalwert am Ort der Messung zwischen 0,1 und 10 bar liegt.

Man erhält ohne Regelung ein Druckdiagramm entsprechend **Fig. 1a,** mit Regelung entsprechend **Fig. 1b.**

### Einschneckenentgasungsextruder bzw. Kaskadenextruder

Das erfindungsgemäße Verfahren eignet sich für Einschneckenentgasungsextruder oder sogenannte Kaskadenextruder, da das zu lösende Problem bei beiden Systemen auftritt. Ein Einschneckenentgasungsextruder besitzt eine von einem Motor angetriebene Schnecke mit einer Eintragszone mit einer ersten Schneckenstufe (15), einer Austragszone (22) einer dazwischenliegenden Entgasungszone (14). Die Austragszone (22) beginnt unmittelbar hinter der Entgasungszone (14) und erstreckt sich bis zum Ende der Schnecke bzw. bis zur Schneckenspitze. Der Einschneckenentgasungsextruder kann auch als Schmelzeextruder betrieben werden, wenn er anstelle von festem Granulat mit Schmelze beschickt wird.

Der Kaskadenextruder kann als eine spezielle bzw. alternative Ausführung des Einschneckenentgasungsextruders angesehen werden. Die beiden Scheckenstufen sind dabei in zwei hintereinandergeschaltete Einschnecken mit separaten Antrieben unterteilt. Die Drehzahlen der beiden Schnecken werden üblicherweise in einem festen Verhältnis gehalten, können aber getrennt geregelt werden. Die Austragszone (22) beim Kaskadenextruder entspricht der Länge seiner zweiten Schnecke bzw. der zweiten Schneckenstufe.

### Der Meßregelkreis (M)

Der Druckmeßsensor ist Bestandteil eines Meßregelkreises (M), der einen Druckmeßsensor (P) in der ersten Hälfte der Austragszone, einen Regler (R) und ein Stellglied (S) zur Beeinflussung des Drucks in der Austragszone beinhaltet. Bevorzugt ist ein Meßverstärker (2) vorhanden, der den Minimalwert des Drucks herausfiltert und zur Regelung bereitstellt.

Bevorzugt kann der Schneckenantrieb (9) mit einem Umdrehungssensor ausgestattet sein, der sich auf dem Antrieb selbst oder auf einer Welle befindet, die synchron zum Antrieb läuft und das Umdrehungssignal mit in die Regelung des Minimalwert des Drucks einbezogen wird. Auf diese Weise läßt sich das Druckminimum-Signal regelungstechnisch einfacher abgreifen.

Der Druck wird mittels des Druckmeßsensors (P) gemessen und am Ort der Messung über den Meßregelkreis (M) mittels der Stellmittel (S) zur Beeinflussung des Drucks so eingestellt, daß er zwischen 0,1 und 10 bar (10⁴ bis 10 x 10⁵ Pascal), bevorzugt zwischen 0,2 und 1 bar (jeweils absolut) liegt. Eine Druckobergrenze von 5 bar kann sinnvoll sein, da dadurch vermieden wird, daß Schmelze durch Rückstau aus der Entgasungsöffnung austritt.

Bis zum Ende der Austragszone steigt der Druck in den Bereich von 10 bis 250, meist 20 bis 50 bar. Der Druck in der Austragszone hinter der Schneckenspitze ist stets höher als der Druck in der ersten Hälfte der Austragszone.

Der geregelte Druck ist erfindungsgemäß immer größer als der Druck im Entgasungsbereich und kleiner als der Druck am Ende der Austragszone.

Der Sollwert für den Druck wird idealerweise so eingestellt, dass gerade keine Schmelze aus der Entgasungsöffnung austritt. Er hängt damit im wesentlichen vom Abstand des Druckaufnehmers von der Entgasungsöffnung und der Schneckengeometrie in diesem Bereich ab.

### Stellmittel (S)

Als Stellmittel (S) zur Beeinflussung des Drucks in der Austragszone können z. B. der Antrieb (9) zur Regelung der Schneckendrehzahl, eine verstellbare Drossel oder ein drosselbarer Bypass dienen. Es wurde auch gefunden, dass sich bei größeren Extrudern mit einem Schneckendurchmesser > 45 mm über die Zylindertemperatur im Bereich der Austragszone, insbesondere in der zweiten Hälfte der Austragszone, der Druck in der ersten Hälfte der Austragszone beeinflussen lässt. Beim Kaskadenextruder kann der Antrieb zur Regelung der Schneckendrehzahl der in Förderrichtung hinten liegenden Schnecke bzw. das Verhältnis der Schneckendrehzahlen der beiden Schnecken zueinander als Stellmittel (S) dienen.

Ein drosselbarer Bypass wäre bevorzugt zwischen der zweiten Hälfte, bzw. dem letzten Drittel, insbesondere dem letzten Viertel der Austragszone und im Bereich des Druckmeßsensors (P) in der ersten Hälfte, bevorzugt im ersten Drittel, besonders bevorzugt im ersten Viertel der Austragszone vorzusehen.

In **Fig. 2a** ist eine erfindungsgemäße Vorrichtung am Beispiel eines Einschneckenentgasungsextruders schematisch dargestellt. Der Einschneckenentgasungsextruder weist eine erste Schneckenstufe (13), eine Entgasungszone (14), eine Austragszone (22) auf. Ebenfalls dargestellt ist der Materialtrichter (12) zur Einspeisen von Kunststoff-Granulat, Der Meßregelkreis (M = M1) weist als Druckmeßsensor (P) den Druckmeßsensor (1), einen Meßverstärker (2), als Regler (R) die Regler (4), (5) und (7) sowie als Stellglied (S) den Antriebsmotor (9) auf.

### Zusätzlicher Meßregelkreis M2

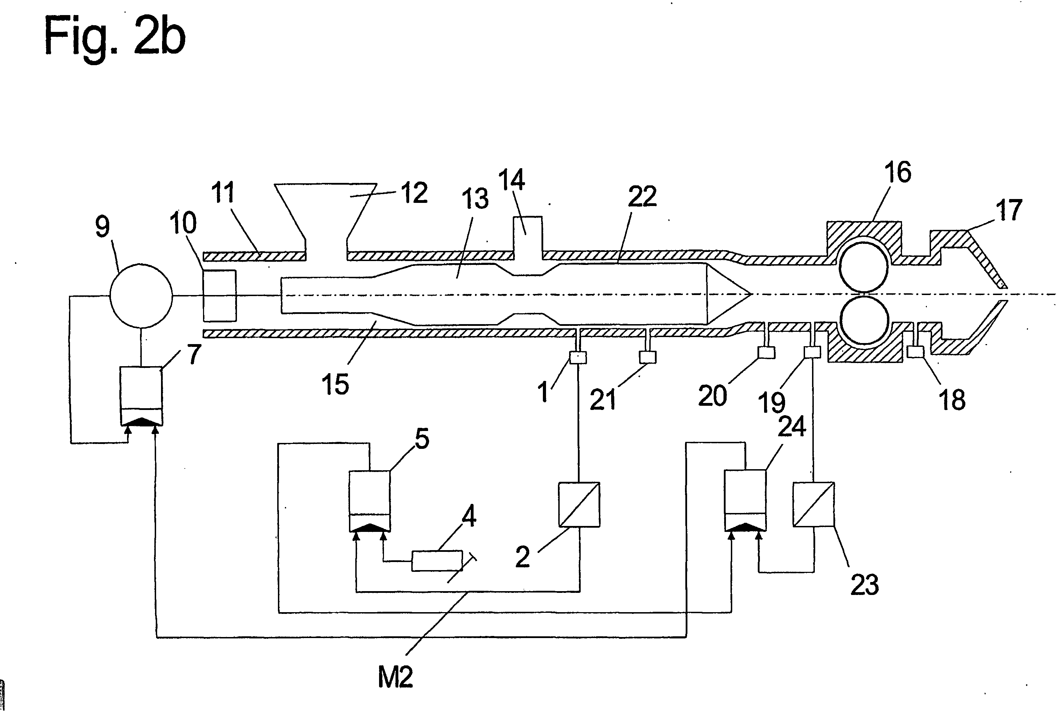

Besonders bevorzugt ist die Ausführungsform gemäß **Fig. 2 b**, bei der ein zweiter Meßregelkreis (M2) vorhanden ist, bestehend aus einem Druckmeßsensor (19), der sich hinter der Schneckenspitze in der Austragszone befindet, dem Meßverstärker (23),den Reglern (24) und (7) und einem Stellglied (9). Der vom Druckmeßsensors (19) gemessene Druck wird über den Regler (7) und das Stellglied (9) so eingestellt, daß der Maximalwert des Drucks an Ort der Messung begrenzt wird. Dies hat den Vorteil, daß insbesondere in der Anfahrphase materialbelastende Druckspitzen vermieden werden können.

### Bevorzugte Ausführungsformen

Bei einem Einschneckenentgasungsextruder mit einer Zahnradschmelzepumpe (16), die sich hinter der Schneckenspitze bzw. hinter der Austragszone (22) befindet, kann die Regelung des Minimalwertes des Drucks in der ersten Hälfte der Austragszone erfolgen, indem bei zu niedrigem Druck die Drehzahl des Antriebsmotors (9) erhöht wird.

Bei einem Einschneckenentgasungsextruder mit einer verstellbaren Drossel, die sich in Förderrichtung hinter der Schneckenspitze bzw. hinter der Austragszone (22) befindet, kann die Regelung des Minimalwertes des Drucks in der ersten Hälfte der Austragszone (22) erfolgen, indem bei zu niedrigem Druck die Drossel geschlossen wird.

Bei einem Einschneckenentgasungsextruder mit einem drosselbaren Bypass, der in geöffnetem Zustand Schmelze aus dem Raum hinter der Austragszone (22), das heißt hinter der Schneckenspitze, zur ersten Hälfte der Austragszone (22) zurückfördert, kann die Regelung des Minimalwertes des Drucks in der ersten Hälfte der Austragszone erfolgen, indem bei zu niedrigem Druck der Bypass geöffnet wird.

Bei einem Einschneckenentgasungsextruder mit getrennt regelbarer Zylindertemperatur der Austragszone kann die Regelung des Minimalwertes des Drucks in der ersten Hälfte der Austragszone erfolgen, indem bei zu niedrigem Druck die Zylindertemperatur der Austragszone erhöht wird.

Bei einem Kaskadenextruder kann die Regelung des Minimalwertes des Drucks in der ersten Hälfte der Austragszone (22) erfolgen, indem bei zu niedrigem Druck die Drehzahl des Antriebsmotors für den Schneckenteil in der Austragszone reduziert wird.

### Thermoplastische Kunststoffe

Das der Erfindung zugrunde liegende Problem betrifft praktisch alle thermoplastischen Kunststoffe, die mit Einschneckenentgasungsextrudem oder Kaskadenextrudern verarbeitet werden. Insbesondere eignet sich das Verfahren für thermoplastische Kunststoffe wie Acrylnitril-Butadien-Stryrol (ABS), Polyethylenterephthalate, Polybutylenterephthalate, Polyamide, Polystyrole, Polymethylmethacrylate, Polycarbonate, schlagzäh modifiziertes Polymethylmethacrylat oder sonstige Mischungen (Blend) aus zwei oder mehreren thermoplastischen Kunststoffen. Das Problem der Verunreinigungen durch Ablagerungen wirkt sich jedoch besonders bei transparenten Kunststoffen, wie Polycarbonat oder Polymethacrylat, bzw. Polymethylmethacrylat-Kunststoffen aus.

### Vorrichtung

Die Erfindung betrifft weiterhin eine Vorrichtung, die ein Einschneckenentgasungsextruder oder ein Kaskadenextruder ist und mit einem Meßregelkreis (M) zur Ausführung des erfindungsgemäßen Verfahrens ausgestattet ist.

### Vorteilhafte Wirkungen der Erfindung

Die erfindungsgemäße Druckregelung stellt sicher, daß die Schneckengänge in der ersten Hälfte der Austragszone auch bei ungünstigen Betriebszuständen vollständig mit Schmelze gefüllt sind. Dadurch wird das Auftreten der beschriebenen Verunreinigungen deutlich vermindert bzw. unterbunden. Die Filtereinheiten können sparsamer ausgelegt werden. Die Extrusionsgeschwindigkeit kann erhöht werden: Filterwechselintervalle können verlängert werden. Die Produktqualität wird verbessert. Der Produktdurchsatz erhöht sich. Fehlfabrikation nimmt entsprechend ab.

Weitere Vorteile ergeben sich bei einem Wechsel der extrudierten Formmasse, insbesondere beim Wechsel unterschiedlich eingefärbter Formmassen, bei dem die zuletzt extrudierte Formmasse mit der neu zu extrudierenden Formmasse zunächst vollständig ausgetragen, quasi ausgewaschen werden muß. Reste der zuletzt extrudierten Formmasse lassen sich beim erfindungsgemäßen Verfahren bzw. mit der erfindungsgemäßen Vorrichtung aufgrund der besseren Schneckenfüllung schneller durch die neue Formmasse ausgetragen.

Die Erfindung betrifft weiterhin eine entsprechende Vorrichtung mit der das erfindungsgemäße Verfahren ausgeführt werden kann. Die Vorrichtung zur Förderung der Schmelze eines thermoplastischen Kunststoffs, umfaßt somit einen Einschneckenentgasungsextruder oder einen Kaskadenextruder mit erster Schneckenstufe (15), Entgasungszone (14) Austragszone (22), einem Druckmeßsensor (1) in der ersten Hälfte der Austragszone, der Bestandteil eines Meßregelkreises ist, sowie die Mittel (16) zur Beeinflussung des Drucks in der Austragszone.

### BEISPIEL

Ein Versuchsaufbau entsprechend Fig. 2a wurde realisiert: Es wurde ein Einschneckenentgasungsextruder, Hersteller Fa. Stork, D = 35 mm, L = 32 D, mit einer Zahnradschmelzepumpe (16) der Fa. Maag Pump Systems Extrex Ex 28 eingesetzt. Der Meßregelkreis (M) enthielt als Druckmeßsensor (1) einen DMS-Druckaufnehmer der Fa. Gneuß, (0-200 bar), einen Meßverstärker zum Ausfiltern der Minimaldruckwerte und einen Regler, der die Drehzahl des Extruder-Antriebsmotors als Stellglied regelt. Wahrend des Extrusionsbetriebs mit Polymethylmethacrylat als thermoplastischem Kunststoff wurde der Druck in ersten Hälfte der Austragszone zwischen 0,5 bis 6 bar gehalten.

Damit wurde bei einem Farbwechselversuch von einer transparenten auf eine gedeckt blaue Formmasse der Übergang im Vergleich zu einem Versuchsaufbau ohne die erfindungsgemäße Druckregelung am Anfang der Austragszone auf etwa die Hälfte verkürzt (nur noch ca. 5 min statt 10 min).

## Patentansprüche

1. Verfahren zur Regelung des Minimalwertes des Drucks in der ersten Hälfte der Austragszone in Förderrichtung bei einem Einschneckenentgasungsextruder oder einem Kaskadenextruder während der Förderung einer Schmelze eines thermoplastischen Kunststoffs, wobei der Einschneckenentgasungsextruder oder der Kaskadenextruder jeweils eine erste Schneckenstufe (15), eine Entgasungszone (14), eine Austragszone (22) sowie einen Meßregelkreises (M) aufweisen, der einen Druckmeßsensor (P) in der ersten Hälfte der Austragszone, einen Regler (R) und ein Stellglied (S) zur Beeinflussung des Drucks in der Austragszone beinhaltet,
**dadurch gekennzeichnet,**
**daß** der Druck mittels des Druckmeßsensors (P) gemessen wird und über den Regler (R) und das Stellglied (S) so eingestellt wird, daß der Minimalwert am Ort der Messung zwischen 0,1 und 10 bar liegt.

2. Verfahren nach Anspruch 1, **dadurch gekennzeichnet, daß** der Meßregelkreis (M) einen Meßverstärker (2) beinhaltet, der den Minimalwert des Drucks herausfiltert und zur Regelung bereitstellt.

3. Verfahren nach Anspruch 1 oder 2 , **dadurch gekennzeichnet, daß** der Schneckenantrieb (9) mit einem Umdrehungssensor ausgestattet ist, der sich auf dem Antrieb selbst oder auf einer Welle befindet, die synchron zum Antrieb läuft, wobei das Umdrehungssignal mit in die Regelung des Minimalwertes des Drucks in der ersten Hälfte der Austragszone (22) einbezogen wird.

4. Verfahren nach einem oder mehreren der Ansprüche 1 bis 3 , **dadurch gekennzeichnet, daß** ein zweiter Meßregelkreis (M2) vorhanden ist, bestehend aus einem Druckmeßsensor (19), der sich hinter der Schneckenspitze der Austragszone (22) befindet, einen Regler (7) und ein Stellglied (9) aufweist, und der Druck mittels des Druckmeßsensors (19) gemessen wird und über den Regler (7) und das Stellglied (9) so eingestellt, daß der Maximalwert des Drucks am Ort der Messung begrenzt wird.

5. Verfahren nach einem oder mehreren der Ansprüche 1 bis 4, **dadurch gekennzeichnet, daß** es sich um einen Einschneckenentgasungsextruder mit einer Zahnradschmelzepumpe (16) handelt, die sich hinter der Austragszone (22) befindet, wobei die Regelung des Minimalwertes des Drucks in der ersten Hälfte der Austragszone (22) erfolgt, indem bei zu niedrigem Druck die Drehzahl des Antriebsmotors (9) erhöht wird.

6. Verfahren nach einem oder mehreren der Ansprüche 1 bis 4 , **dadurch gekennzeichnet, daß** es sich um einen Einschneckenentgasungsextruder mit einer verstellbaren Drossel handelt, die sich hinter der Austragszone (22) befindet, wobei die Regelung des Minimalwertes des Drucks in der ersten Hälfte der Austragszone (22) erfolgt, indem bei zu niedrigem Druck die Drossel geschlossen wird.

7. Verfahren nach einem oder mehreren der Ansprüche 1 bis 4 , **dadurch gekennzeichnet, daß** es sich um einen Einschneckenentgasungsextruder mit einem drosselbaren Bypass handelt, der in geöffnetem Zustand Schmelze aus dem Raum hinter der Austragszone (22) zur ersten Hälfte der Austragszone (22) zurückfördert, wobei die Regelung des Minimalwertes des Drucks in der ersten Hälfte der Austragszone (22) erfolgt, indem bei zu niedrigem Druck der Bypass geöffnet wird.

8. Verfahren nach einem oder mehreren der Ansprüche 1 bis 4 , **dadurch gekennzeichnet, daß** es sich um einen Einschneckenentgasungsextruder mit einer getrennten Regelung der Temperatur des Zylinders im Bereich der Austragszone handelt, wobei die Regelung des Minimalwertes des Drucks in der ersten Hälfte der Austragszone (22) erfolgt, indem bei zu niedrigem Druck die Temperatur des Zylinders im Bereich der Austragszone erhöht wird.

9. Verfahren nach einem oder mehreren der Ansprüche 1 bis 4 , **dadurch gekennzeichnet, daß** es sich um einen Kaskadenextruder handelt und die Regelung des Minimalwertes des Drucks in der ersten Hälfte der Austragszone (22) erfolgt, indem bei zu niedrigem Druck die Drehzahl des Antriebsmotors für den Schneckenteil in der Austragszone (22) reduziert wird

10. Verfahren nach einem oder mehreren der Ansprüche 1 bis 9, **dadurch gekennzeichnet, daß** als thermoplastischer Kunststoff ein Polyethylenterephthalat, ein Polybutylenterephthalat, ein Polyamid, ein Polystyrol, ein Polymethylmethacrylat, ein Polycarbonat, schlagzähmodifiziertes Polymethylmethacrylat oder eine sonstige Mischung (Blend) aus zwei oder mehreren thermoplastischen Kunststoffen verarbeitet wird.

11. Vorrichtung, die ein Einschneckenentgasungsextruder oder ein Kaskadenextruder ist, **dadurch gekennzeichnet, daß** sie mit einem Meßregelkreis (M) zur Ausführung des Verfahrens nach einem oder mehreren der Ansprüche 1 bis 10 ausgestattet ist.

## Claims

1. Method of regulating the minimum pressure level in the first half of the delivery zone in the direction of conveying in a single-screw degassing extruder or a cascade extruder, during the conveying of molten thermoplastic plastics, the single-screw degassing extruder or the cascade extruder having in each case a first screw stage (15), a degassing zone (14), a delivery zone (22) and a measuring regulating circuit (M), containing a pressure measuring sensor (P) in the first half of the delivery zone, a regulator (R) and a control member (S) for varying the pressure in the delivery zone,
**characterised in that**
the pressure is measured by means of the pressure measuring sensor (P) and is adjusted by means of the regulator (R) and control member (S) so that the minimum value at the measuring site is between 0.1 and 10 bar.

2. Method according to claim 1, **characterised in that** the measuring regulating circuit (M) contains a measuring amplifier (2) which filters out the minimum pressure level and prepares it for regulation.

3. Method according to claim 1 or 2, **characterised in that** the screw drive (9) is fitted with a rotation sensor which is located on the drive itself or on a shaft that runs synchronously with the drive, the rotation signal being included in the regulation of the minimum pressure level in the first half of the delivery zone (22).

4. Method according to one or more of claims 1 to 3, **characterised in that** a second measuring regulating circuit (M2) is provided, consisting of a pressure measuring sensor (19) located behind the screw tip of the delivery zone (22), a regulator (7) and a control member (9), and the pressure is measured by means of the pressure measuring sensor (19) and is adjusted by means of the regulator (7) and control member (9) so that the maximum pressure level is limited at the measuring site.

5. Method according to one or more of claims 1 to 4, **characterised in that** a single-screw degassing extruder is used, having a geared melt pump (16) located behind the delivery zone (22), wherein the minimum value of the pressure in the first half of the delivery zone (22) is regulated by increasing the speed of the drive motor (9) if the pressure is too low.

6. Method according to one or more of claims 1 to 4, **characterised in that** a single-screw degassing extruder is used, having an adjustable throttle which is located behind the delivery zone (22), wherein the minimum pressure level in the first half of the delivery zone (22) is regulated by closing the throttle if the pressure is too low.

7. Method according to one or more of claims 1 to 4, **characterised in that** a single-screw degassing extruder is used, having a throttleable bypass which, in the open state, returns melt from the chamber behind the delivery zone (22) to the first half of the delivery zone (22), wherein the minimum pressure level in the first half of the delivery zone (22) is regulated by opening the bypass if the pressure is too low.

8. Method according to one or more of claims 1 to 4, **characterised in that** a single-screw degassing extruder is used having separate regulation of the temperature of the cylinder in the region of the delivery zone, wherein the minimum pressure level in the first half of the delivery zone (22) is regulated by increasing the temperature of the cylinder in the region of the delivery zone if the pressure is too low.

9. Method according to one or more of claims 1 to 4, **characterised in that** a cascade extruder is used and the minimum pressure level in the first half of the delivery zone (22) is regulated by reducing the speed of the drive motor for the screw section in the delivery zone (22) if the pressure is too low.

10. Method according to one or more of claims 1 to 9, **characterised in that** a polyethylene terephthalate, a polybutylene terephthalate, a polyamide, a polystyrene, a polymethyl methacrylate, a polycarbonate, impact-modified polymethyl methacrylate or some other mixture (blend) of two or more thermoplastic plastics is processed as the thermoplastic plastics.

11. Apparatus which is a single-screw degassing extruder or a cascade extruder, **characterised in that** it is equipped with a measuring regulating circuit (M) for carrying out the method according to one or more of claims 1 to 10.

## Revendications

1. Procédé de régulation de la valeur minimale de la pression dans la première moitié de la zone d'évacuation dans la direction de transport sur une extrudeuse dégazeuse à une vis ou une extrudeuse en cascade pendant le transport d'une masse fondue d'une matière thermoplastique, l'extrudeuse dégazeuse à une vis ou l'extrudeuse en cascade présentant respectivement un premier étage de vis (15), une zone de dégazage (14), une zone d'évacuation (22) ainsi qu'un circuit de mesure et régulation (M), qui contient un capteur de mesure de la pression (P) dans la première moitié de la zone d'évacuation, un régulateur (R) et un élément de réglage (S) pour influencer la pression dans la zone d'évacuation,
**caractérisé en ce que**
la pression est mesurée au moyen du capteur de mesure de la pression (P) et est réglée par le régulateur (R) et l'élément de réglage (S) de telle manière que la valeur minimale à l'emplacement de la mesure se situe entre 0,1 et 10 bar.

2. Procédé selon la revendication 1,
**caractérisé en ce que**
le circuit de mesure et régulation (M) contient un amplificateur de mesure (2) qui filtre la valeur minimale de la pression et la fournit pour la régulation.

3. Procédé selon la revendication 1 ou 2,
**caractérisé en ce que**
l'entraînement de la vis (9) est muni d'un capteur de rotation qui se trouve sur l'entraînement lui-même ou sur un arbre qui fonctionne de façon synchronisée avec l'entraînement, le signal de rotation étant introduit dans la régulation de la valeur minimale de la pression dans la première moitié de la zone d'évacuation (22).

4. Procédé selon l'une ou plusieurs des revendications 1 à 3,
**caractérisé en ce qu'**
un deuxième circuit de mesure et régulation (M2) constitué d'un capteur de mesure de la pression (19) qui se trouve derrière la pointe de la vis de la zone d'évacuation (22), présente un régulateur (7) et un élément de réglage (9), et la pression est mesurée au moyen du capteur de mesure de la pression (19) et est réglée par le régulateur (7) et l'élément de réglage (9) de telle manière que la valeur maximale de la pression est limitée à l'emplacement de la mesure.

5. Procédé selon l'une ou plusieurs des revendications 1 à 4,
**caractérisé en ce que**
l'extrudeuse dégazeuse à une vis comporte une pompe d'extraction de la masse fondue à roue dentée (16), qui se trouve derrière la zone d'évacuation (22), la régulation de la valeur minimale de la pression dans la première moitié de la zone d'évacuation (22) étant réglée en augmentant la vitesse du moteur d'entraînement (9) si la pression est trop faible.

6. Procédé selon l'une ou plusieurs des revendications 1 à 4,
**caractérisé en ce que**
l'extrudeuse dégazeuse à une vis comporte un étranglement réglable qui se trouve derrière la zone d'évacuation (22), la régulation de la valeur minimale de la pression dans la première moitié de la zone d'évacuation (22) se fait en fermant l'étranglement si la pression est trop faible.

7. Procédé selon l'une ou plusieurs des revendications 1 à 4,
**caractérisé en ce que**
l'extrudeuse dégazeuse à une vis comporte une dérivation rétrécissable qui, à l'état ouvert, recycle une masse fondue de l'espace situé en arrière de la zone d'évacuation (22) vers la première moitié de la zone d'évacuation (22), la régulation de la valeur minimale de la pression dans la première moitié de la zone d'évacuation (22) se fait en ouvrant la dérivation si la pression est trop faible.

8. Procédé selon l'une ou plusieurs des revendications 1 à 4,
**caractérisé en ce qu'**
l'extrudeuse dégazeuse à une vis comporte une régulation séparée e la température du cylindre dans la région de la zone d'évacuation, la régulation de la valeur minimale de la pression dans la première moitié de la zone d'évacuation (22) se fait en élevant la température du cylindre dans la région de la zone d'évacuation lorsque la pression est trop faible.

9. Procédé selon l'une ou plusieurs des revendications 1 à 4,
**caractérisé en ce que**
l'extrudeuse est en cascade et la régulation de la valeur minimale de pression dans la première moitié de la zone d'évacuation (22) se fait en réduisant la vitesse du moteur d'entraînement pour la partie de vis dans la zone d'évacuation (22) lorsque la pression est trop faible.

10. Procédé selon l'une ou plusieurs des revendications 1 à 9,
**caractérisé en ce que**
comme matière thermoplastique, on traite un polyéthylènetéréphtalate, un polybutylènetéréphtalate, un polyamide, un polystyrène, un polyméthylinéthacrylate, un polycarbonate, un polyméthylméthacrylate modifié résistant aux chocs ou un autre mélange de deux ou plusieurs matières thermoplastiques.

11. Dispositif tel qu'une extrudeuse dégazeuse à une vis ou une extrudeuse en cascade,
**caractérisé en ce qu'**
il comporte un circuit de mesure et régulation (M) pour réaliser le procédé selon une ou plusieurs des revendications 1 à 10.
